# EUROPÄISCHE PATENTANMELDUNG

(11) **EP 4 435 988 A2**
(43) Veröffentlichungstag der Anmeldung: **25.09.2024**
(21) Anmeldenummer: 24159054.6
(22) Anmeldetag: 22.02.2024
(51) Int. Cl.: H02H 3/20

(54) **ÜBERSPANNUNGSSCHUTZANORDNUNG FÜR EIN ELEKTRISCHES GERÄT**

(30) Priorität: 27.02.2023 DE 102023104757
(71) Anmelder: Pilz GmbH & Co. KG, 73760 Ostfildern (DE)
(72) Erfinder: Oerder, Marius Fabian, 73760 Ostfildern (DE); Neumann, Benedikt Karl, 73760 Ostfildern (DE)
(74) Vertreter: Witte, Weller & Partner Patentanwälte mbB

(57) **Zusammenfassung**

Überspannungsschutzanordnung (10), insbesondere eines Netzteils, für ein elektrisches Gerät, insbesondere für ein Sicherheitsschaltgerät. Die Überspannungsschutzanordnung (10) weist ein Abschalteinrichtung (12) mit einer Detektionsschaltungsanordnung (26) und mit einer ersten Trennschaltungsanordnung (28) auf. Die Detektionsschaltungsanordnung (26) ist dazu eingerichtet, eine Spannung, die größer als ein erster definierter Schwellwert ist, auf einem Strompfad (18) zu dem elektrischen Gerät als eine Überspannung zu detektieren und die erste Trennschaltungsanordnung (28) ist dazu eingerichtet, in Abhängigkeit der durch die Detektionsschaltungsanordnung (26) detektierten Überspannung eine erste Trennung des Strompfads (18) auszuführen. Die Abschalteinrichtung (12) weist ferner eine zweite Trennschaltungsanordnung (38) auf, die dazu eingerichtet ist, eine zweite Trennung des Strompfads (18) auszuführen, wenn der Strompfad (18) durch die erste Trennschaltungsanordnung (28) getrennt ist.

## Beschreibung

Die vorliegende Erfindung betrifft eine Überspannungsschutzanordnung für ein elektrisches Gerät, insbesondere für eine Sicherheitssteuerung oder ein Sicherheitsschaltgerät. Die Überspannungsschutzanordnung weist eine Abschalteinrichtung mit einer Detektionsschaltungsanordnung sowie mit einer ersten Trennschaltungsanordnung auf, wobei die Detektionsschaltungsanordnung dazu eingerichtet ist, eine Spannung, die größer als ein erster definierter Schwellwert ist, auf einem Strompfad zu dem elektrischen Gerät als eine Überspannung zu detektieren, und wobei die erste Trennschaltungsanordnung dazu eingerichtet ist, in Abhängigkeit der durch die Detektionsschaltungsanordnung detektierten Überspannung eine erste Trennung des Strompfads auszuführen.

Eine solche Überspannungsschutzanordnung ist bspw. aus DE 10 2008 051 514 A1 bekannt.

Sicherheitssteuerungen oder Sicherheitsschaltgeräte, im Nachfolgenden allgemein als Sicherheitsschaltvorrichtungen bezeichnet, weisen Netzteile auf, die definierte Betriebsspannungen für die in der Sicherheitsschaltvorrichtung verwendeten elektrischen Bauteile bereitstellen. In der Regel wandeln die Netzteile höhere Gleich- oder Wechselspannungen in eine oder mehrere kleinere Betriebsspannungen um. Zum Schutz vor gefährlichen Körperströmen werden bei Sicherheitsschaltvorrichtungen üblicherweise zunächst externe Netzteile verwendet, um die maximale Ausgangsspannung auch bei Bauteilfehlern auf einen für den Menschen ungefährlichen Wert zu begrenzen. Bei gängigen Sicherheitsschaltvorrichtungen liegt diese maximale Ausgangsspannung, die nicht überschritten werden darf, üblicherweise bei 65 V, wobei die Nennspannung für den Betrieb von Sicherheitsschaltvorrichtungen in der Regel 24 V beträgt.

Zur Versorgung der elektrischen Bauteile weisen Sicherheitsschaltvorrichtungen ferner integrierte Netzteile auf. Diese wandeln eine von einem externen Netzteil bereitgestellte Nennspannung, beispielsweise 24 V, in die benötigten kleineren Betriebsspannungen, beispielsweise 3,3 V, 5 V, 12 V oder 24 V um. Die integrierten Netzteile müssen dazu ausgebildet sein, Überspannungen von bis zu 65 V zu beherrschen, sodass auch bei defekten Bauteilen innerhalb des Netzteils eine anliegende Überspannung die zu versorgenden Bauteile der Sicherheitsschaltvorrichtung nicht beschädigt oder zerstört. Eine schaltungstechnische Ausgestaltung einer solchen Überspannungsschutzvorrichtung ist beispielsweise in der eingangsgenannten DE 10 2008 051 514 A1 gezeigt.

DE 10 2008 051514 A1 zeigt eine Überspannungsüberwachungsanordnung, bei der eine Detektionseinheit eine Überspannung auf einem Strompfad zu einem zu versorgenden Gerät detektiert und basierend hierauf ein erstes Unterbrechungsmittel in dem Strompfad ansteuert, welches den Strompfad bei einer Überspannung unterbricht. Ferner verfügt die Anordnung über ein zweites Unterbrechungsmittel, das parallel zum ersten Unterbrechungsmittel geschaltet ist und das von dem ersten Unterbrechungsmittel unabhängig ansteuerbar ist. Das zweite Unterbrechungsmittel ist dazu verwendbar, das erste Unterbrechungsmittel zu überbrücken, um dieses im laufenden Betrieb testen zu können. Problematisch bei dieser Überspannungsüberwachungsanordnung ist jedoch, dass das erste Unterbrechungsmittel, welches üblicherweise als Transistor ausgebildet ist, nach der Abschaltung allein gegen die Überspannung schützt. Sollte das Bauteil hierbei versagen, kann die Überspannung weiterhin zu Schäden in dem zu versorgenden Gerät führen.

Vor diesem Hintergrund ist es eine Aufgabe der vorliegenden Erfindung eine verbesserte Überspannungsschutzanordnung anzugeben, die auch nach einer Abschaltung zuverlässig vor einer Überspannung schützt. Ferner ist es eine Aufgabe, eine Überspannungsschutzanordnung anzugeben, die dies auf günstige Weise ermöglicht.

Gemäß einem Aspekt der vorliegenden Erfindung wird diese Aufgabe gelöst durch eine Überspannungsschutzanordnung der eingangsgenannten Art, wobei die Abschalteinrichtung ferner eine zweite Trennschaltungsanordnung aufweist, die dazu eingerichtet ist, eine zweite Trennung des Strompfads auszuführen, wenn der Strompfad durch die erste Trennschaltungsanordnung getrennt ist.

Es ist somit eine Idee, eine weitere Trennschaltungsanordnung in den Strompfad zu schalten, die zusätzlich zu der ersten Trennschaltungsanordnung den Strompfad auftrennt, wenn die erste Trennschaltungsanordnung aufgrund einer Überspannung den Strompfad unterbricht. Nach Auftreten einer Überspannung ist der Strompfad somit an zwei Stellen unterbrochen und damit zuverlässig getrennt. Die zweite Trennschaltungsanordnung kann hierbei in Abhängigkeit der ersten Trennschaltungsanordnung agieren, d.h. die zweite Trennschaltungsanordnung löst vorzugsweise direkt, automatisch und unmittelbar aus, wenn die erste Trennschaltungsanordnung ausgelöst wird.

Die zweite Trennschaltungsanordnung kann mit einem Steueranschluss an einen Abschnitt des Strompfads gekoppelt sein, der von der ersten Trennschaltungsanordnung bei einer Überspannung abgetrennt wird. Die Abtrennung durch die zweite Trennschaltungsanordnung (zweite Trennung) erfolgt hierbei räumlich bezogen in einem Abschnitt des Strompfads, der vor einer Stelle liegt, an der die erste Trennschaltungsanordnung den Strompfad auftrennt, also in einem Abschnitt des Strompfads zwischen einer Leistungszuführung und einer Trenneinrichtung der ersten Trennschaltungsanordnung.

Da es sich bei der zweiten Trennschaltungsanordnung im Wesentlichen um eine zusätzliche Unterbrechungsmöglichkeit für den Strompfad handelt, kann diese vorzugsweise in Abhängigkeit der ersten Trennschaltungsanordnung schalten und benötigt somit keine eigene Detektionsschaltungsanordnung, die auf eine Überspannung prüft und die zweite Trennschaltungsanordnung unabhängig auslöst. Somit kann die zweite Trennschaltungsanordnung einfach und kostengünstig ausgebildet sein und gleichwohl den normativen Vorgaben für Sicherheitsschaltvorrichtung einer hohen Schutzkategorie genügen. Insbesondere kann durch die erste Trennschaltungsanordnung eine sehr schnelle Abschaltung realisiert werden, während die zweite Trennschaltungsanordnung das elektrische Gerät eigensicher macht, indem es den Strompfad zusätzlich, insbesondere irreversibel, trennt.

In einer vorteilhaften Weiterbildung kann die erste Trennung durch die erste Trennschaltungsanordnung gemäß einem ersten Wirkprinzip erfolgen und die zweite Trennung durch die zweite Trennschaltungsanordnung kann gemäß einem zweiten Wirkprinzip erfolgen, wobei das zweite Wirkprinzip von dem ersten Wirkprinzip verschieden ist.

Das Wirkprinzip bezeichnet hier die Art und Weise, wie die erste bzw. die zweite Trennung technisch realisiert wird. Das erste Wirkprinzip kann bspw. auf einem Schaltelement, insbesondere einem Halbleiterschalter oder einem Relais, beruhen, deren Schaltkontakte so in dem Strompfad angeordnet sind, dass durch Betätigen des Schaltelements der Strompfad geöffnet oder geschlossen wird. Das zweite Wirkprinzip wiederum kann auf dem Auslösen einer Sicherung beruhen, wie es bspw. aus dem Überspannungsschutz mittels einer sogenannten Crowbar-Schaltung grundsätzlich bekannt ist. Hierzu kann eine elektrische Sicherung, bspw. eine Schmelzsicherung vorgesehen sein, die in dem Strompfad angeordnet wird. Die Sicherung ist so ausgelegt, dass sie grundsätzlich leitend ist, aber bei Überschreiten eines definierten Stroms "auslöst" und den Strompfad vorzugweise irreversible trennt. Das Auslösen kann bewusst herbeigeführt werden, indem bspw. der Strompfad kurzgeschlossen wird und es so zu einem hohen Kurzschlussstrom kommt, der die Sicherung auslöst. Die Ausgestaltung mit zwei unterschiedlichen Wirkprinzipien hat u.a. den Vorteil einer Diversifizierung der Abschaltung, wodurch die Sicherheit erhöht werden kann. Ferner können normative Vorgaben höherer Schutzkategorien effektiv erfüllt werden.

In einer weiteren Ausgestaltung kann die erste Trennschaltungsanordnung ein erstes Schaltelement aufweisen, das in dem Strompfad angeordnet ist. Über ein Schaltelement lässt sich besonders einfach eine gesteuerte Abschaltung des Strompfads erreichen. Das Schaltelement kann ein Relais oder ein Halbleiterschalter, wie ein Transistor, insbesondere ein MOSFET, sein. Das Schaltelement kann von einer Steuerung oder direkt aus einer elektrischen Schaltung heraus angesteuert werden, wodurch es sich auf einfache Weise mit einer Detektionseinrichtung koppeln lässt. Ein Halbleiterschaltelement ermöglicht zudem eine sehr schnelle erste Trennung des Strompfads.

Bevorzugt kann die zweite Trennschaltungsanordnung ein zweites Schaltelement aufweisen, das einen Steueranschluss aufweist, der an einer Stelle zwischen dem ersten Schaltelement und dem elektrischen Gerät mit dem Strompfad verbunden ist. Die zweite Trennschaltungsanordnung kann somit ebenfalls über ein Schaltelement ausgelöst werden, wobei die Trennung des Strompfads selbst auf einem anderen Prinzip beruhen kann, wie vorstehend beschrieben worden ist. Zur Ansteuerung kann das Schaltelement mit einem Steueranschluss, bei einem Transistor bspw. dem Gate-Anschluss, so mit dem Strompfad gekoppelt sein, dass dieses schaltet, wenn die erste Trennschaltungsanordnung den Strompfad trennt und das Schaltelement mit dem abgetrennten Abschnitt, also dem Abschnitt zwischen dem Ort der ersten Trennung und dem angeschlossenen elektrischen Gerät, verbunden ist. Bspw. kann das zweite Schaltelement als selbstsperrender MOSFET ausgebildet sein, dessen Gate-Anschluss (G) mit dem zuvor bezeichneten Abschnitt verbunden ist und dessen Source-Anschluss (S) mit dem Strompfad an einer Stelle vor dem Ort, an dem die erste Trennung stattfindet, verbunden ist. Nach dem Auslösen der ersten Trenneinrichtung stellt sich dann ein Spannungsabfall zwischen Source und Gate ein, woraufhin der MOSFET schaltet und die zweite Trennung des Strompfads herbeiführt. Gemäß dieser Ausgestaltung kann die zweite Trennschaltungsanordnung auf einfache und effektive Weise an das Auslösen der ersten Trennschaltungsanordnung gekoppelt werden.

Die zweite Trennschaltungsanordnung kann ferner ein erstes Unterbrecherelement, das in dem Strompfad in Serie zu dem ersten Schaltelement angeordnet ist, sowie eine Kapazität aufweisen, wobei das zweite Schaltelement dazu eingerichtet ist, bei Betätigung die Kapazität kurzzuschließen und das erste Unterbrecherelement auszulösen. Die zweite Trennschaltung kann folglich die zweite Trennung über ein Unterbrecherelement, wie bspw. eine Sicherung, herbeiführen. Das Unterbrecherelement kann in Serie zu dem ersten Schaltelement der ersten Trennschaltungsanordnung in dem Strompfad angeordnet sein. Bevorzugt ist das Unterbrecherelement in einem Abschnitt des Strompfads zwischen einer Leistungszuführung und dem ersten Schaltelement angeordnet. Das Unterbrecherelement kann ausgelöst werden, indem das zweite Schaltelement den Strompfad mit einem Masseanschluss kurzschließt und einen Kurzschlussstrom erzeugt, der größer ist als ein Nennstrom des Unterbrecherelements. Die hierfür notwendige Energie kann bspw. von einer Kapazität bereitgestellt werden, die zwischen dem Strompfad und dem Massenschluss anordenbar ist. Schließt das zweite Schaltelement den Strompfad mit dem Masseanschluss kurz, entlädt sich die Kapazität über das Unterbrecherelement und löst dieses aus. Die zweite Trennschaltungsanordnung lässt sich auf diese Weise einfach und effektiv realisieren.

Die zweite Trennschaltungsanordnung kann ferner eine erste Suppressordiode aufweisen, die parallel zu der Kapazität zwischen der Kapazität und dem Unterbrecherelement in dem Strompfad geschaltet ist und die Kapazität entlädt, wenn das erste Unterbrecherelement ausgelöst worden ist. Wenn das Unterbrecherelement auslöst, wird der Kurzschluss der Kapazität aufgehoben. Hierbei kann es vorkommen, dass die Kapazität noch nicht vollständig entladen ist. In diesem Fall kann die Ladung der Kapazität über eine entsprechend dimensionierte Suppressordiode abfließen und die Kapazität entladen. Die Ausgestaltung trägt somit dazu bei, dass die Überspannungsschutzanordnung nach der Auslösung in einen sicheren Zustand übergeht.

In einer weiteren Ausgestaltung kann die Überspannungsschutzanordnung ferner eine weitere Abschalteinrichtung aufweisen. Die weitere Abschalteinrichtung kann eine zweite Suppressordiode, die zwischen dem Strompfad und einem Masseanschluss geschaltet ist, und ein zweites Unterbrecherelement, das in dem Strompfad angeordnet ist, aufweisen, wobei die zweite Suppressordiode so dimensioniert ist, dass sie bei einer Spannung, die größer als ein zweiter definierter Schwellwert ist, das zweite Unterbrecherelement auslöst. Die Überspannungsschutzanordnung kann somit neben einer zusätzlichen Strompfadtrennung eine weitere von der ersten Abschalteinrichtung unabhängige Abschalteinrichtung aufweisen. Die weitere Abschalteinrichtung ist redundant zur der ersten Abschalteinrichtung und kann zudem vorzugweise auf einem anderen Wirkprinzip beruhen. So kann die weitere Abschalteinrichtung ebenfalls eine Trennung durch ein Unterbrecherelement herbeiführen, ohne dass hierfür bspw. ein Schaltelement benötigt wird. Die zwischen dem Strompfad und dem Masseanschluss geschaltete Suppressordiode kann so dimensioniert sein, dass sie ab einer definierten Grenzspannung zu einer Überspannung leitend wird und einen Kurzschluss zwischen dem Strompfad und dem Masseanschluss verursacht, der, ähnlich wie zuvor im Zusammenhang mit der zweiten Trennschaltungsanordnung beschrieben, das zweite Unterbrecherelement auslöst. Besonders vorteilhaft können das erste Unterbrecherelement und das zweite Unterbrecherelement identisch sein, sodass insgesamt ein Unterbrecherelement eingespart werden kann. Auf diese Weise können besonders vorteilhaft Synergien zwischen den einzelnen Schaltungsanordnungen ausgenutzt werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert:
Fig. 1 zeigt in einer vereinfachten schematischen Darstellung eine Ausführungsform einer Überspannungsschutzanordnung.
Fig. 2 zeigt in einer schematischen Ansicht bevorzugte Ausgestaltungen der einzelnen Schaltungsanordnungen der Fig. 1.
Fig. 3 zeigt eine alternative zweite Trennschaltungsanordnung 72, die in einer Überspannungsschutzanordnung nach Fig. 1 oder 2 verwendbar ist.
Fig. 4 zeigt eine konkrete Ausführungsform der alternativen zweiten Trennschaltungsanordnung 72.
Fig. 5 zeigt in einer vereinfachten schematischen Darstellung eine weitere Ausführungsform einer Überspannungsschutzanordnung.

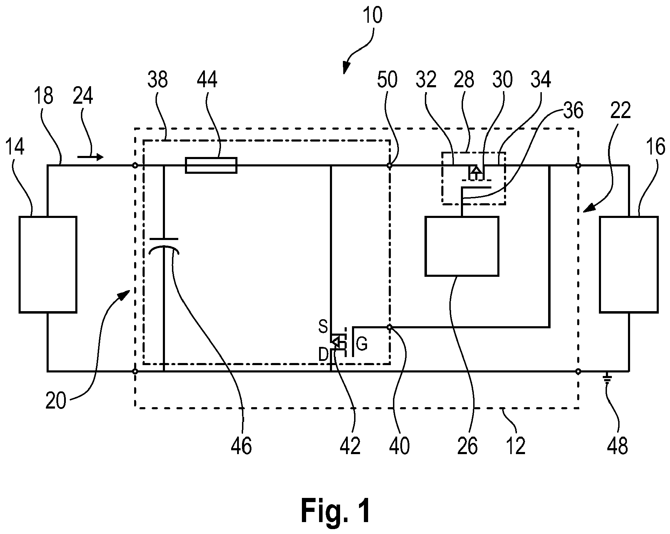

Fig. 1 zeigt in einer vereinfachten schematischen Darstellung eine Ausführungsform einer Überspannungsschutzanordnung. In ihrer Gesamtheit ist die Überspannungsschutzanordnung hier mit der Bezugsziffer 10 bezeichnet.

Die Überspannungsschutzanordnung 10 weist mindestens eine erste Abschalteinrichtung 12 auf, die zwischen einer Leistungszuführung 14 und einem Verbraucher 16 angeordnet ist. Die Leistungszuführung 14 kann eine Spannungsquelle oder ein Transformator sein, der Verbraucher eine beliebige Last. Als Strompfad 18 wird im Folgenden eine leistungsführende Verbindung zwischen der Leistungszuführung 14 und dem Verbraucher bezeichnet, die im Wesentlichen durch die Abschalteinrichtung 12 realisiert wird.

Die Verbindung der Abschalteinrichtung 12 zur Leistungszuführung 14 wird als Eingangsseite, kurz Eingang 20, der Abschalteinrichtung 12 bezeichnet und die Verbindung der Abschalteinrichtung 12 zu dem Verbraucher 16 wird als Ausgangsseite, kurz Ausgang 22, der Abschalteinrichtung 12 bezeichnet. Richtungsangaben bezogen auf den Strompfad, wie "vor" und "nach", beziehen sich immer auf eine Richtung 24 von dem Eingang 20 zu dem Ausgang 22. Elemente der Abschaltvorrichtung 12, die vor anderen Elementen, also "stromaufwärts", angeordnet sind, sind somit schaltungstechnisch eingangsseitig angeordnet und damit näher am Eingang 20 der Abschaltvorrichtung 12. Element, die nach anderen Elementen angeordnet sind, also "stromabwärts", sind Elemente, die gegenüber den anderen Elementen näher am Ausgang 22 der Abschaltvorrichtung 12 angeordnet sind.

Die Abschalteinrichtung 12 setzt sich in der Fig. 1 gezeigten Ausführungsform aus drei Schaltungsanordnungen zusammen. Die ersten Schaltungsanordnung ist einer Detektionsschaltungsanordnung 26, die dazu eingerichtet ist, eine Überspannung auf dem Strompfad 18 zu detektieren und ein entsprechendes Steuersignal bereitzustellen, wenn eine Überspannung auf dem Strompfad 18 detektiert wird. Die Detektionsschaltungsanordnung 26 kann eine einfache Schwellwertdetektion beinhalten, bei der kontinuierlich eine Spannung auf dem Strompfad 18 mit einer Referenzspannung (erster definierter Schwellwert) verglich wird. Überschreitet die gemessene Spannung die Referenzspannung in einem definierten Umfang, wird dies von der Detektionsschaltungsanordnung 26 signalisiert, indem ein entsprechendes Ausgangssignal bereitgestellt wird, oder in einer umgekehrten Logik, ein solches Signal nicht mehr bereitgestellt wird. Detektionsschaltungsanordnungen 26 dieser Art sind in verschiedenen Ausgestaltungen grundsätzlich bekannt.

Die zweite Schaltungsanordnung der Abschalteinrichtung 12 ist eine Trennschaltungsanordnung 28 (erste Trennschaltungsanordnung). Die erste Trennschaltungsanordnung 28 ist dazu eingerichtet, den Strompfad 18 aufzutrennen und die leistungsführende Verbindung zwischen Eingang 20 und Ausgang 22 zu unterbrechen. In dem hier dargestellten Beispiel ist die erste Trennschaltungsanordnung 28 aus einem Schaltelement 30 gebildet, dessen schaltbare Kontakte 32, 34 mit dem Strompfad 18 verbunden sind und dessen Steueranschluss 36 mit der Detektionsschaltungsanordnung 26 so verbunden ist, dass ein Signal der Detektionsschaltungsanordnung 26, welches eine Überspannung anzeigt, zu einem Schaltvorgang führt, bei dem der Strompfad 18 durch das Schaltelement 30 getrennt wird. Das Schaltelement 30 kann, wie hier dargestellt, ein selbstsperrender p-Kanal-MOSFET sein, der so von der Detektionsschaltungsanordnung 26 angesteuert wird, dass er in einem Normalbetrieb, wenn keine Überspannung anliegt, geschlossen ist und den Strompfad 18 durchschaltet.

Die Detektionsschaltungsanordnung 26 und die erste Trennschaltungsanordnung 28 bilden zusammen eine klassische Überspannungsschutzanordnung, die hier gemäß der vorliegenden Offenbarung durch eine weitere Trennschaltungsanordnung 38 (zweite Trennschaltungsanordnung) ergänzt wird. Die weitere Trennschaltungsanordnung 38 bildet die dritte Schaltungsanordnung der Abschalteinrichtung 12.

Die zweite Trennschaltungsanordnung 38 ist dazu eingerichtet, ebenfalls den Strompfad 18 zu trennen. Insbesondere kann die zweite Trennschaltungsanordnung 38 den Strompfad 18 zusätzlich zu der ersten Trennschaltungsanordnung 28 stromaufwärts vor diesem unterbrechen. Hierbei kann die zweite Trennschaltungsanordnung 38 ohne eine separate Detektionsschaltungsanordnung ausgebildet sein. Vielmehr kann ein Auslösen der zweiten Trennschaltungsanordnung 38 an ein Auslösen der ersten Trennschaltungsanordnung 28 gekoppelt sein.

So kann die zweite Trennschaltungsanordnung 38 dazu eingerichtet sein, den Strompfad 18 dann zu trennen, wenn die erste Trennschaltungsanordnung 28 den Strompfad 18 in Reaktion eines Signals der Detektionsschaltungsanordnung 26 aufgetrennt hat. Für diese Kopplung kann die zweite Trennschaltungsanordnung 38 mit dem Strompfad 18 stromabwärts von der ersten Trennschaltungsanordnung 28 ausgesehen gekoppelt sein, also an einer Stelle zwischen der ersten Trennschaltungsanordnung 28 und dem Verbraucher 16 und somit in einem Abschnitt, der bei einer Überspannung von der Leistungszuführung 14 getrennt ist. Insbesondere kann ein Steueranschluss 40 der zweiten Trennschaltungsanordnung 38 mit besagtem Abschnitt verbunden sein, sodass nach Trennung des Strompfads 18 durch die erste Trennschaltungsanordnung 28 (erste Trennung) die im Normalbetrieb an dem Steueranschluss 40 anliegende Spannung nicht mehr an dem Steueranschluss 40 anliegt.

Die zweite Trennschaltungsanordnung 38 kann ferner dazu eingerichtet sein, die Trennung des Strompfads 18 (zweite Trennung) an einer Stelle im Strompfad 18 auszuführen, die vor der ersten Trennschaltungsanordnung 28 liegt. Vorzugsweise findet die zweite Trennung des Strompfads 18 auch vor der Detektionsschaltungsanordnung 26 statt, d.h. vor einer Stelle, an der die Detektionsschaltungsanordnung 26 die Überspannung auf dem Strompfad 18 bestimmt. Demnach können nach der zweiten Trennung die erste Trennschaltungsanordnung 28 und die Detektionsschaltungsanordnung 26 von der Leistungszuführung getrennt sein.

Die zweite Trennschaltungsanordnung 38 kann auf einem anderen Wirkprinzip beruhen als die erste Trennschaltungsanordnung 28. Hierfür kann die zweite Trennschaltungsanordnung 38, wie in Fig. 1 dargestellt ist, bspw. ein Schaltelement 42 (zweites Schaltelement), ein Unterbrecherelement 44 und eine Kapazität 46 aufweisen. Das Unterbrecherelement 44, vorzugweise in Form einer Sicherung, ist in der leistungsführenden Leitung des Strompfads 18 angeordnet. Das Schaltelement 42 und die Kapazität 46 sind zwischen der leistungsführenden Leitung des Strompfads 18 und einem Masseanschluss 48 angeordnet. Die Kapazität 46 ist dabei vor dem Unterbrecherelement 44 angeordnet und das Schaltelement 42 nach dem Unterbrecherelement 44.

Wenn die erste Trennschaltungsanordnung 28 auslöst und den Strompfad 18 trennt, stellt sich zwischen dem Steueranschluss 40 der zweiten Trennschaltungsanordnung 38 und einem Ausgang 50 der ersten Trennschaltungsanordnung 38 eine Spannung ein, die das Schaltelement 42 leitend schaltet. Das Schaltelement 42 kann bspw. ein selbstsperrender p-Kanal-MOSFET sein, der bei einer negativen Spannung zwischen dem Steueranschluss 40 (Gate (G) des MOSFET) und dem Ausgang 50 (Source (S) des MOSFET) einschaltet, sodass zwischen Source und Drain (D) des MOSFETs ein Strom fließen kann. Das Einschalten des Schaltelements 42 führt dazu, dass sich die parallelgeschaltete Kapazität 46 über das Unterbrecherelement 44 entlädt. Hierbei fließt ein Kurzschlussstrom, der das Unterbrecherelement 44 auslöst und den Strompfad 18 auftrennt, vorzugsweise irreversible.

Die zweite Trennung des Strompfads 18 durch die zweite Trennschaltungsanordnung 38 trennt den Strompfad 18 somit zusätzlich zu der ersten Trennung, sodass der Strompfad 18 an verschiedenen Stellen, vorzugweise auf verschiedene Weise, aufgetrennt ist. Damit kann eine zuverlässige und sichere Trennung gewährleistet werden, die auch bei Netzteilen für sicherheitskritische, elektrische Geräte, bspw. Sicherheitsschaltvorrichtungen, verwendet werden kann, um normative Anforderungen einer hohen Schutzkategorie zu erfüllen.

Die vorstehend beschriebene und die im Nachfolgenden noch zu beschreibenden Überspannungsschutzanordnungen 10 können besonders bevorzugt in einem Netzteil integriert sein. Insbesondere kann es sich bei dem Netzteil, um ein integriertes Netzteil eines elektrischen Geräts, insbesondere einer Sicherheitsschaltvorrichtung, handeln. Integriert bedeutet hier, dass das Netzteil mit den weiteren elektrischen Komponenten des elektrischen Geräts in einem gemeinsamen Gehäuse verbaut ist. Insbesondere können auch der Verbraucher 16 und die Leistungszuführung 14 in diesem Gehäuse angeordnet sein. Bei der Überspannungsschutzanordnung 10 kann es sich um eine diskrete Schaltung handeln, die mit diskreten (bedrahteten) Einzelbauelementen auf einer Leiterplatte ausgebildet ist. Ferner kann die Schaltung eine eigene Leiterplatte verwenden oder zusammen mit anderen elektrischen Komponenten auf einer gemeinsamen Leiterplatte ausgebildet sein. Das Netzteil weist neben der Überspannungsschutzanordnung weitere elektrische Komponenten auf, insbesondere die Leistungszuführung, die bspw. ein Transformator sein kann. Darüber hinaus hat das Netzteil externe Anschlüsse für die Zuführung von Leistung von außen, bspw. von einem externen Netzteil oder einer allg. Stromversorgung.

Das Netzteil kann neben diskreten, elektrischen Bauteilen auch integrierte Schaltkreise (engl. integrated circuits, kurz ICs) aufweisen. Diese können verschiedene Funktionen für die Bereitstellung der gewünschten Ausgabespannung wahrnehmen und u.a. auch eigene Überspannungsschutzeinrichtungen aufweisen. Da jedoch bei einer sicherheitstechnischen Betrachtung ein IC als ein einzelnes Bauteil betrachtet wird, können die integrierten Maßnahmen regelmäßig nicht als weitere Schutzeinrichtungen in Betracht gezogen werden, um die normativen Anforderungen zu erfüllen.

Im Folgenden werden nun konkrete Ausgestaltungen der der einzelnen Schaltungsanordnungen näher erläutert.

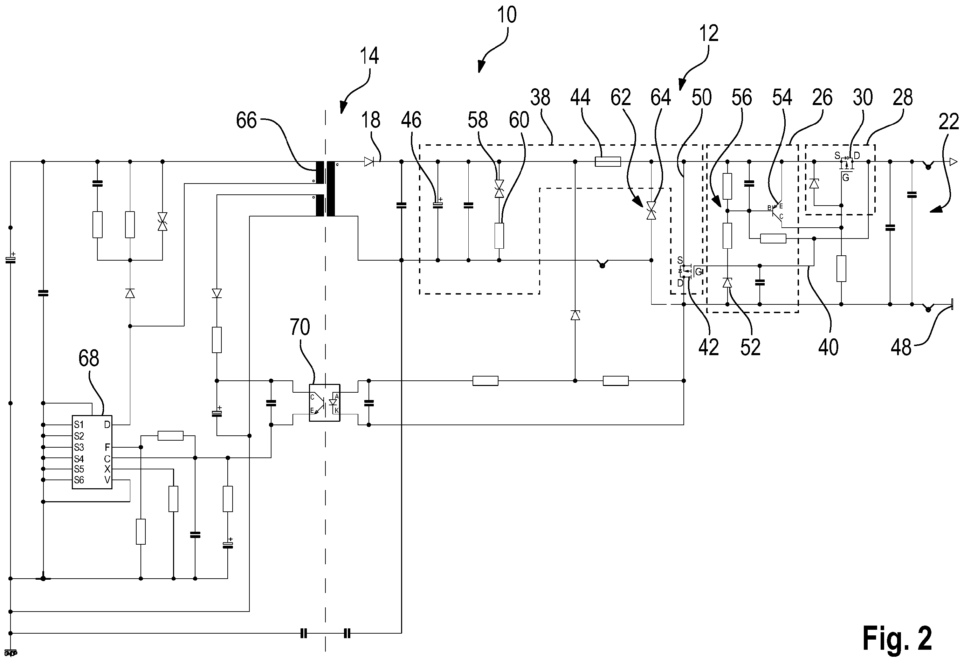

Fig. 2 zeigt in einer schematischen Ansicht bevorzugte Ausgestaltungen der einzelnen Schaltungsanordnungen der Fig. 1. Es versteht sich, dass die in Fig. 2 gezeigte Ausführung nicht auf die konkrete Ausführung beschränkt ist und die einzelnen Schaltungsanordnungen auch in anderer Kombination oder Ausgestaltung kombiniert werden können. In der Fig. 2 bezeichnen die gleichen Bezugszeichen die gleichen Elemente wie in Fig. 1. Eine detaillierte Beschreibung dieser Elemente wird daher im Folgenden weggelassen.

Die Überspannungsschutzanordnung 10 der in Fig. 2 gezeigten Ausführung weist eine erste Abschalteinrichtung 12 mit einer Detektionsschaltungsanordnung 26 sowie mit einer ersten und zweiten Trennschaltungsanordnung 28, 38 auf, wie bereits in Bezug auf Fig. 1 beschrieben.

Die Detektionsschaltungsanordnung 26 beinhaltet hier eine Diode 52, ein Schaltelement 54 sowie einen Satz Widerstände 56. Die Diode 52 ist in Sperrrichtung zwischen der leistungsführenden Leitung und dem Masseanschluss 48 geschaltet und im Zusammenspiel mit den Widerständen 56 so dimensioniert, dass bei einer Überspannung auf dem Strompfad 18 die Diode 52 leitend wird. Wird bspw. im Normalbetrieb eine Spannung von 24 V am Ausgang 22 bereitgestellt, kann die Diode 52 so dimensioniert sein, dass diese leitend wird, wenn es bei 30 V auf der leistungsführenden Leitung zu einem Durchbruch der Diode 52 kommt. Über das Schaltelement 54 signalisiert die Detektionsschaltungsanordnung 26, ob die Diode 52 leitend ist oder nicht. Das Schaltelement 52 ist mit der ersten Trennschaltungsanordnung 28 gekoppelt, die hier, wie bereits in Bezug auf die Fig. 1 beschrieben, aus einem in dem Strompfad 18 angeordneten Schaltelement 30, bspw. einem selbstsperrenden p-Kanal-MOSFET, gebildet ist. Über das Schaltelement 52 wird das Schaltelement 30 so angesteuert, dass bei einer Überspannung auf dem Strompfad 18, also im Fall einer leitenden Diode 52, der Strompfad 18 durch das Schaltelement 30 aufgetrennt wird, um den Verbraucher (hier nicht dargestellt) von der Leistungszuführung 14 zu entkoppeln.

Die Abschalteinrichtung 12 verfügt ferner über eine zweite Trennschaltungsanordnung 38, die eingerichtet ist, den Strompfad 18 zusätzlich zu der ersten Trennschaltungsanordnung 28 zu trennen. Die zweite Trennschaltungsanordnung 38 ist in der hier gezeigten Ausführung im Wesentlichen identisch zu der Ausführung gemäß Fig. 1 und weist ein Schaltelement 42, ein Unterbrecherelement 44 sowie eine Kapazität 46 auf, die in der mit Bezug auf Fig. 1 beschriebenen Weise zusammenwirken, um eine zweite Trennung des Strompfads 18 zusätzlich zu der ersten Trennschaltungsanordnung 28 und in dessen Abhängigkeit zu ermöglichen.

Die zweite Trennschaltungsanordnung 38 gemäß der Ausführung nach Fig. 2 weist darüber hinaus eine Suppressordiode 58 und einen Widerstand 60 auf, die in Serie zwischen der leistungsführenden Leitung des Strompfads 18 und dem Masseanschluss 48 angeordnet sind. Wenn das Unterbrecherelement 44 auslöst, bevor die Kapazität 46 vollständig entladen ist, kann die verbleibende Ladung über die Suppressordiode 58 und den Widerstand 60 abfließen, sodass die Kapazität 46 in jedem Fall vollständig entleert wird. Von der entladen Kapazität 46 kann im Folgenden keine Gefahr eines Stromschlags mehr ausgehen.

Die Überspannungsschutzanordnung 10 kann ferner eine zweite Abschalteinrichtung 62 aufweisen. Die zweite Abschalteinrichtung 62 kann eine Suppressordiode 64 aufweisen, die zwischen der leistungsführenden Leitung und dem Masseanschluss 48 geschaltet ist. Die Suppressordiode 64 wird leitend, wenn eine definierte Spannung auf dem Strompfad 18 überschritten wird und ist hier so dimensioniert, dass die definierte Spannung einem Schwellwert für eine Überspannung auf dem Strompfad 18 entspricht. Die Suppressordiode 64 wird somit leitend, wenn auf dem Strompfad 18 eine Überspannung vorliegt. Die leitende Suppressordiode schließt die leistungsführende Leitung des Strompfads 18 mit dem Masseanschluss 48 kurz. Der dabei resultierende Kurzschlussstrom löst ein Unterbrecherelement im Strompfad 18 aus und trennt diesen sicher und vorzugsweise irreversible auf. Das Unterbrecherelement kann ein der zweiten Abschalteinrichtung 62 eigenes Unterbrecherelement sein oder vorzugsweise mit dem Unterbrecherelement 44 der zweiten Trennschaltungsanordnung 38 identisch sein. Letzteres ermöglicht es, Synergien zwischen den Schaltungsanordnungen auszunutzen und überflüssige Redundanzen zu vermeiden.

Die zweite Abschalteinrichtung 62 ist eine zu der ersten Abschalteinrichtung 12 redundante Überspannungsschutzeinrichtung, die vorzugsweise unter Ausnutzung von Synergien mit der ersten Abschalteinrichtung 12 realisiert ist. Da die zweite Abschalteinrichtung 62 zudem auch auf einem unterschiedlichen Wirkprinzip beruhen kann, können hiermit Fehler gemeinsamer Ursache effektiv ausgeschlossen werden. Darüber hinaus können die erste Abschalteinrichtung 12 und zweite Abschalteinrichtung 62 auf unterschiedliche Kenngrößen eingestellt sein. So kann eine Abschalteinrichtung bspw. darauf dimensioniert sein, möglichst schnell auszulösen, während die andere Abschalteinrichtung eine möglichst sichere Trennung ermöglicht. Die erste Abschalteinrichtung 12 kann bspw. eine reversible Trennung des Strompfads 18 bewirken und die zweite Abschaltvorrichtung eine irreversible Trennung des Strompfads 18. Denkbar ist auch, dass die beiden Abschalteinrichtung für unterschiedliche Arten von Überspannungen ausgerichtet sind und bspw. hinsichtlich der Höhe oder der Dauer einer Überspannung unterschiedlich ansprechen. Auf diese Weise kann ein elektrisches Gerät vor einer größeren Bandbreite an Überspannungen effektiv und sicher geschützt werden.

Die Leistungszuführung 14 ist in der Ausführung gemäß Fig. 2 ein Transformator, wobei die Überspannungsschutzanordnung 10 mit ihrem Eingang 20 an die Sekundärwicklung 66 des Transformators gekoppelt ist. Primärseitig befindet sich hier ferner ein integrierter Schaltkreis 68 zur Steuerung des Netzteils und zur Regelung der Leistungszuführung 14. Der integrierte Schaltkreis 68 kann ferner zur Diagnose mit der Überspannungsschutzanordnung 10 gekoppelt sein, vorzugsweise über einen optoelektronischen Koppler 70 zur galvanischen Trennung der primär- und sekundärseitigen Schaltungsteile. Grundsätzlich ließe sich auch über die Rückkopplung und den integrierten Schaltkreis ein Überspannungsschutz realisieren, jedoch würde solch einer die normativen Anforderungen nicht erfüllen, da der integrierte Schaltkreis als ein einzelnes Bauteil anzunehmen ist, dessen Ausfall als Ganze zu berücksichtigen ist. Die Überspannungsschutzanordnung 10 kann Teil eines Netzteils sein, dass in der Fig. 2 nur ausschnittsweise dargestellt ist. Insbesondere können auf der Primärseite der hier dargestellten Leistungszuführung 14 weitere Bauelemente das Netzteil vervollständigen, die hier aus Gründen der Übersichtlichkeit wegelassen worden sind, wie bspw. externe Anschlüsse zur Verbindung mit einer externen Stromversorgung.

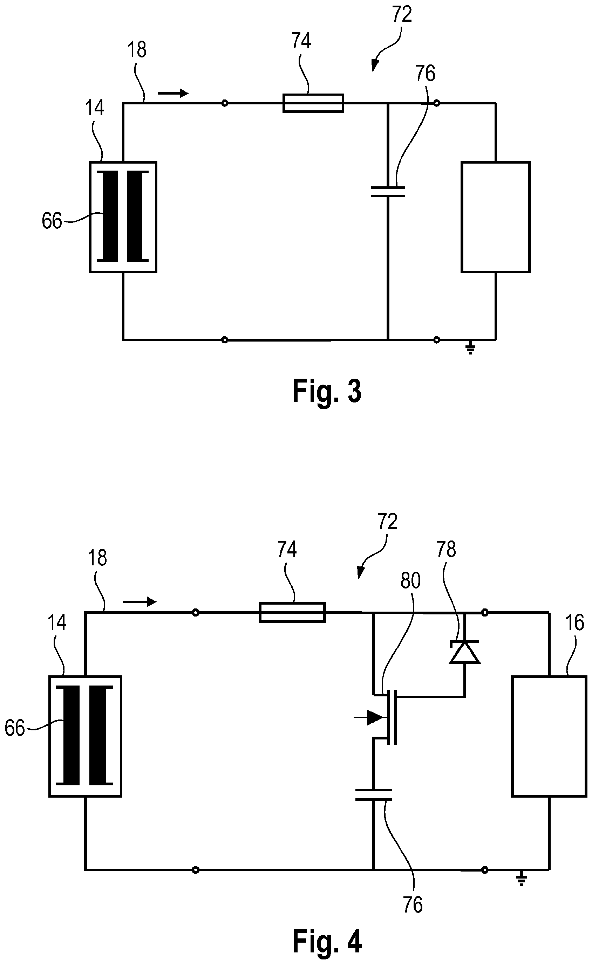

Fig. 3 zeigt eine alternative, zweite Trennschaltungsanordnung 72, die anstelle der zweiten Trennschaltungsanordnung 38 in einer der zuvor beschriebenen Überspannungsschutzanordnungen 10 verwendet werden kann. Fig. 3 zeigt das grundsätzliche Prinzip der alternativen Schaltung.

Die alternative, zweite Trennschaltungsanordnung 72 weist ein Unterbrecherelement 74 und eine Kapazität 76 auf, die gemeinsam mit einer Sekundärwicklung 66 der Leistungszuführung 14 zusammenwirken. Die Kapazität 76 ist so dimensioniert, dass bei einer erhöhten Spannung auf dem Strompfad 18 und einer höheren Frequenz die Kapazität 76 und die Induktivität der Sekundärwicklung 66 in einen Resonanzschwingkreis übergehen, wobei die hieraus resultierende Stromerhöhung ein Unterbrecherelement 72 auslöst. Das Unterbrecherelement 72 kann als Sicherung realisiert sein.

Die alternative, zweite Trennschaltungsanordnung 72 kann somit zusätzlich zu der ersten Trennschaltungsanordnung 28 (hier nicht dargestellt) den Strompfad 18 sicher auftrennen. Auch hier ist eine zunächst schnelle Trennung des Strompfads 18 durch die erste Trennschaltungsanordnung 28 möglich, während das Netzteil anschließend eigensicher wird, wenn durch den Resonanzschwingkreis die Sicherung ausgelöst wird.

Fig. 4 zeigt eine konkrete Ausführungsform der alternativen, zweiten Trennschaltungsanordnung 72. Zusätzlich zu den zuvor beschriebenen Elementen der alternativen, zweiten Trennschaltungsanordnung 72 gemäß Fig. 3 weist die Trennschaltungsanordnung 72 gemäß Fig. 4 eine Diode 78, insbesondere eine Z-Diode, sowie ein Schaltelement 80 auf.

Über das Schaltelement 80 und die Diode 78 kann die Kapazität 76 im Falle einer Überspannung zugeschaltet werden, sodass bei geeigneter Wahl der Kapazität 76 der zuvor beschriebene Resonanzschwingkreis aus Kapazität 76 und Induktivität der Sekundärwicklung 66 entsteht. Dieser verursacht eine Stromerhöhung, die wiederum das Unterbrecherelement 74 auslöst und den Strompfad zusätzlich zu der ersten Trennschaltungsanordnung 28 auftrennt.

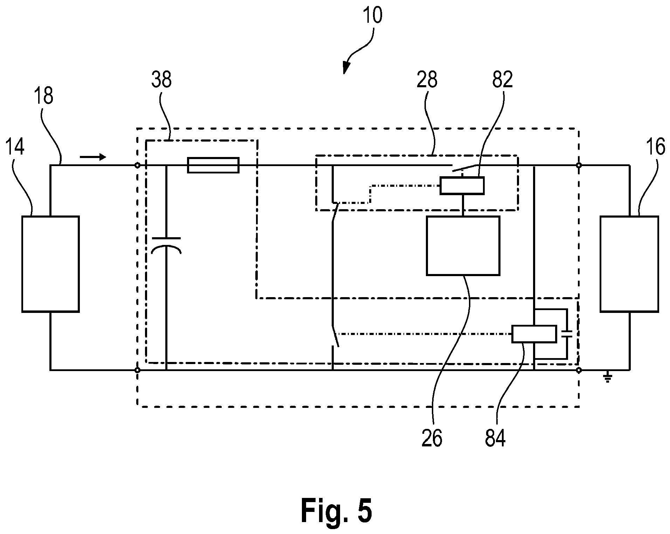

Fig. 5 zeigt abschließend eine weitere Ausführungsform einer Überspannungsschutzanordnung 10. Die in Fig. 5 gezeigte Ausführung entspricht im Wesentlichen der in Fig. 1 gezeigten Ausführung. Sie unterscheidet sich lediglich in der Realisierung der Schaltelemente der ersten und zweiten Trennschaltungsanordnung 28, 38. Anstelle von Halbleiterschaltelementen werden für die Schaltvorgänge der ersten und zweiten Trennschaltungsanordnung 28, 38 hier Relais verwendet. Das Wirkprinzip ist jedoch dasselbe.

Zunächst wird ein erstes Relais 82 der ersten Trennschaltungsanordnung 28 durch die Ansteuerung der Detektionsschaltungsanordnung 26 im Falle einer Überspannung so geschaltet, dass es den Strompfad 18 aufgetrennt. Anschließend wird in Reaktion auf die erste Trennung des Strompfads 18 ein zweites Relais 84 der zweiten Trennschaltungsanordnung 38 angesteuert, um ein Unterbrecherelement 44 auszulösen, welches den Strompfad 18 an einer weiteren Stelle vor der ersten Trennschaltungsanordnung 28 trennt. Somit wird auch bei dieser Ausführung eine doppelte Trennung des Strompfads 18 erreicht.

Die Verwendung von Relaistechnik hat grundsätzlich den Vorteil, dass diese auch in Sicherheitsschaltvorrichtungen eingesetzt werden können, die aufgrund normativer Vorgaben die Verwendung von Relaisschaltern erfordern.

Abschließend ist noch zu beachten, dass Elemente der offengelegten Geräte und Systeme durch entsprechende Hardware- und/oder Softwareelemente, z. B. geeignete Schaltungen, implementiert werden können. Eine Schaltung ist eine strukturelle Anordnung elektronischer Komponenten, einschließlich herkömmlicher Schaltungselemente, integrierter Schaltungen, einschließlich anwendungsspezifischer integrierter Schaltungen, integrierter Standardschaltungen, anwendungsspezifischer Standardprodukte und feldprogrammierbarer Gate-Arrays. Darüber hinaus kann eine Schaltung Zentraleinheiten, Grafikverarbeitungseinheiten und Mikroprozessoren beinhalten, die entsprechend einem Softwarecode programmiert oder konfiguriert werden. Eine Schaltung ist keine reine Software, auch wenn sie die oben beschriebene Hardware beinhaltet, die Software ausführt.

Der Schutzbereich der vorliegenden Erfindung wird durch die nachfolgenden Ansprüche bestimmt und wird durch die in der Beschreibung erläuterten oder in den Figuren gezeigten Merkmale nicht beschränkt.

## Patentansprüche

1. Überspannungsschutzanordnung (10) für ein elektrisches Gerät, aufweisend:
eine Abschalteinrichtung (12) mit einer Detektionsschaltungsanordnung (26) sowie mit einer ersten Trennschaltungsanordnung (28),
wobei die Detektionsschaltungsanordnung (26) dazu eingerichtet ist, eine Spannung, die größer als ein definierter erster Schwellwert ist, auf einem Strompfad (18) zu dem elektrischen Gerät als eine Überspannung zu detektieren, und
wobei die erste Trennschaltungsanordnung (28) dazu eingerichtet ist, in Abhängigkeit der durch die Detektionsschaltungsanordnung (26) detektierten Überspannung eine erste Trennung des Strompfads (18) auszuführen,
**gekennzeichnet dadurch, dass** die Abschalteinrichtung (12) ferner eine zweite Trennschaltungsanordnung (38) aufweist, die dazu eingerichtet ist, eine zweite Trennung des Strompfads (18) auszuführen, wenn der Strompfad (18) durch die erste Trennschaltungsanordnung (28) getrennt ist.

2. Überspannungsschutzanordnung nach Anspruch 1, wobei die erste Trennung durch die erste Trennschaltungsanordnung (28) gemäß einem ersten Wirkprinzip erfolgt und die zweite Trennung durch die zweite Trennschaltungsanordnung (38) gemäß einem zweiten Wirkprinzip erfolgt, wobei das zweite Wirkprinzip von dem ersten Wirkprinzip verschieden ist.

3. Überspannungsschutzanordnung nach Anspruch 1 oder 2, wobei die erste Trennschaltungsanordnung (28) ein erstes Schaltelement (30) aufweist, das in dem Strompfad (18) angeordnet ist.

4. Überspannungsschutzanordnung nach einem der Ansprüche 1 bis 3, wobei die zweite Trennschaltungsanordnung (38) ein zweites Schaltelement (42) aufweist, das einen Steueranschluss (40) aufweist, der an einer Stelle zwischen dem ersten Schaltelement (30) und dem elektrischen Gerät mit dem Strompfad (18) gekoppelt ist.

5. Überspannungsschutzanordnung nach den Ansprüchen 3 und 4, wobei die zweite Trennschaltungsanordnung (38) ferner ein erstes Unterbrecherelement (44) aufweist, das in dem Strompfad (18) in Serie zu dem ersten Schaltelement (30) angeordnet ist, und wobei das zweite Schaltelement (42) dazu eingerichtet ist, bei Betätigung das erste Unterbrecherelement (44) auszulösen.

6. Überspannungsschutzanordnung nach Anspruch 5, wobei die zweite Trennschaltungsanordnung (38) ferner eine Kapazität (46) aufweist und das zweite Schaltelement (42) dazu eingerichtet ist, bei Betätigung die Kapazität (46) kurzzuschließen, um das erste Unterbrecherelement (44) auszulösen.

7. Überspannungsschutzanordnung nach Anspruch 6, wobei die zweite Trennschaltungsanordnung (38) ferner eine erste Suppressordiode (58) aufweist, die parallel zu der Kapazität (46) zwischen der Kapazität (46) und dem Unterbrecherelement (44) in dem Strompfad (18) geschaltet ist und die Kapazität (46) entlädt, wenn das erste Unterbrecherelement (44) ausgelöst worden ist.

8. Überspannungsschutzanordnung nach einem der Ansprüche 1 bis 7, ferner aufweisend: eine weitere Abschalteinrichtung (62) mit einer zweiten Suppressordiode (64), die zwischen dem Strompfad (18) und einem Masseanschluss (48) geschaltet ist, und mit einem zweiten Unterbrecherelement, das in dem Strompfad (18) angeordnet ist, wobei die zweite Suppressordiode (64) so dimensioniert ist, dass sie bei einer Spannung, die größer als ein zweiter definierter Schwellwert ist, das zweite Unterbrecherelement auslöst.

9. Überspannungsschutzanordnung nach Anspruch 5 und 8, wobei das erste Unterbrecherelement (44) und das zweite Unterbrecherelement als ein Bauelement realisiert sind.

10. Überspannungsschutzanordnung nach einem der Ansprüche 1 bis 9, wobei die zweite Trennschaltungsanordnung (38) in direkter Abhängigkeit der ersten Trennschaltungsanordnung (28) die zweite Trennung des Strompfads (18) ausführt.

11. Überspannungsschutzanordnung nach einem der Ansprüche 1 bis 9, wobei eine Leistungszuführung (14) zu der Überspannungsschutzanordnung (10) ein Transformator mit einer Induktivität ist, an die die Überspannungsschutzanordnung (10) angeschlossen ist, wobei die zweite Trennschaltungsanordnung (72) eine Kapazität (76) und ein Unterbrecherelement (44; 74) aufweist, und wobei die Kapazität (76) so dimensioniert ist, dass bei einem Auftreten einer Überspannung die Kapazität (76) und die Induktivität einen Resonanzschwingkreis bilden, der zu einer Stromerhöhung führt, die das Unterbrecherelement (44; 74) auslöst.

12. Überspannungsschutzanordnung nach einem der Ansprüche 1 bis 11, wobei die Überspannungsschutzanordnung in einem Netzteil integriert ist.

13. Überspannungsschutzanordnung nach einem der Ansprüche 1 bis 12, wobei das elektrische Gerät ein Sicherheitsschaltgerät ist.
